# EUROPÄISCHE PATENTSCHRIFT

(11) **EP 1 481 162 B1**
(45) Veröffentlichungstag und Bekanntmachung des Hinweises auf die Patenterteilung: **28.03.2018**
(21) Anmeldenummer: 02794982.5
(22) Anmeldetag: 10.12.2002
(51) Int. Cl.: F02M 69/54, G05D 16/08, G05D 16/02, G05D 16/10

(54) **DRUCKREGLER FÜR EINE KRAFTSTOFFVERSORGUNGSANLAGE EINER BRENNKRAFTMASCHINE**
PRESSURE REGULATOR FOR A FUEL SUPPLY SYSTEM OF AN INTERNAL COMBUSTION ENGINE
REGULATEUR DE PRESSION POUR UNE INSTALLATION D'ALIMENTATION EN CARBURANT D'UN MOTEUR A COMBUSTION INTERNE

(30) Priorität: 02.02.2002 DE 10204269
(43) Veröffentlichungstag der Anmeldung: 01.12.2004
(73) Patentinhaber: ROBERT BOSCH GMBH, 70442 Stuttgart (DE)
(72) Erfinder: WHEELER, Tony, Anderson, SC 29621 (US); STROMSKI, Kasimir, 70794 Filderstadt (DE); PEETZ, Andreas, 71640 Ludwigsburg (DE); GABAUER, Wolfgang, 71679 Asperg (DE)
(86) Internationale Anmeldenummer: PCT/DE2002/004515
(87) Internationale Veröffentlichungsnummer: WO 2003/067077

(56) Entgegenhaltungen:
- EP-A- 1 090 657
- DE-A- 3 233 268
- DE-A- 19 834 140
- US-A- 4 387 715
- US-A- 5 220 941
- US-A- 5 509 444
- US-A- 5 564 397

## Beschreibung

### Stand der Technik

Die Erfindung geht aus von einem Druckregler für eine Kraftstoffversorgungsanlage einer Brennkraftmaschine zum Regeln eines Kraftstoffdrucks, beinhaltend ein Ventil, welches eine durch die Wirkung einer Ventil-Blattfeder gegen einen Ventilsitz in Schließstellung gedrängte Ventilkugel umfasst, nach dem Oberbegriff von Anspruch 1. Die DE 198 34 140 A1 zeigt in der Figur 13 ein dreiteilig aufgebautes Druckventil mit einem Ventilkörper und einem Ventilsitz, bei dem der Ventilkörper als Kugel ausgeführt ist. Die Kugel wird mittels eines scheibenförmigen Federelements auf den Ventilsitz gedrückt. DE 198 34 140 zeigt einen Druckregler nach dem Oberbegriff des Anspruchs 1. Die an dem Anmeldetag der Anmeldung nicht vorveröffentlichte DE 101 07 223 A1 beschreibt einen Druckregler, bei dem eine Ventil-Blattfeder gelenkig gelagert ist und ein, bezogen auf die gelenkige Lagerung, ventilsitzseitiger Arm der Ventil-Blattfeder an der Ventilkugel und ein auf dem Ventilsitz gegenüberliegenden Seite liegender Arm der Ventil-Blattfeder an einem Stützkörper derart abgestützt ist, dass an der Ventil-Blattfeder Drehmomentgleichgewicht herrscht. Die vom Stützkörper erzeugte Vorspannkraft wird durch die Ventil-Blattfeder auf die Ventilkugel als Schließkraft übertragen. Wenn am Druckeingang Kraftstoffdruck herrscht, der groß genug ist, um eine gegenüber der auf die Ventilkugel wirkende Schließkraft größere Druckkraft zu erzeugen, hebt die Ventilkugel vom Ventilsitz ab und gibt einen bestimmten Durchlassquerschnitt frei, so dass Kraftstoff zum Druckausgang strömen kann.

### Vorteile der Erfindung

Durch die kennzeichnenden Merkmale von Anspruch 1 ergibt sich ein verbessertes Geräusch- und Regelverhalten des erfindungsgemäßen Druckreglers.

Durch den Dämpfungsring, welcher zwischen der Ventilkugel und einer zu dieser weisenden Fläche der Ventil-Blattfeder angeordnet und durch die Ventilkugel zwischen der Ventil-Blattfeder und der Ventilkugel gehalten ist, können sich zwischen dem Dämpfungsring, der Ventil-Blattfeder und der Ventilkugel Reibungskräfte ausbilden, welche Schwingungsbewegungen der Ventilkugel dämpfen. Infolgedessen werden von Schwingungen der Ventilkugel herrührende Geräusche spürbar reduziert bzw. treten überhaupt nicht mehr auf. Da ein solcher Dämpfungsring relativ klein baut und sich in unmittelbarer Nachbarschaft zur Ventil-Blattfeder befindet, wird eine die Ventilkugel einschließende Strömung des Kraftstoffs nicht gestört. Weiterhin werden mit dem reibbasierten Dämpfungsring lediglich die Schwindungsbewegungen der Ventilkugel gedämpft, nicht jedoch deren Bewegungsspielraum eingeschränkt, so dass Zentrierbewegungen der Ventilkugel am Ventilsitz weiterhin möglich sind und die Dichtigkeit des Ventils in Schließstellung gewährleistet bleibt.

Gemäß einer bevorzugten Ausführungsform der Erfindung kontaktiert die Ventilkugel die Ventil-Blattfeder, wobei zwischen einem Rand einer Ausnehmung und der Ventilkugel ein geringes Spiel vorhanden ist und der Abschnitt der Ventilkugel durch ein Kugelsegment gebildet wird.

Vorzugsweise wird die Ausnehmung durch die Ringöffnung des Dämpfungsrings gebildet, wodurch eine quasi-formschlüssige Verbindung zwischen der Ventilkugel und dem Dämpfungsring in einer Ebene parallel zur Ventil-Blattfeder entsteht.

Gemäß einer Weiterbildung der bevorzugten Ausführungsform wird der Dämpfungsring durch einen aus einem Elastomer bestehenden Ring mit kreisförmigem Querschnitt gebildet. Alternativ kann der Dämpfungsring aus einem durch spanabhebende Bearbeitung oder durch Spritzgießen hergestellten Kunststoff-Formling bestehen. In beiden Fällen ist die Herstellung und Montage der Dämpfungsringe äußerst einfach, da sie einfache kreisrunde Bauteile darstellen und lediglich zwischen Ventil-Blattfeder und Ventilkugel eingesetzt werden, ohne daß hierzu die Ventil-Blattfeder oder die Ventilkugel verändert werden müßten.

Schwingungen der Ventilkugel relativ zur Ventil-Blattfeder werden auch mit einer weiteren Ausführungsform der Erfindung gedämpft, indem der in das Innere des Druckreglers und damit auch in den Bereich der Ventilkugel geführte Kraftstoff zwischen dem Rand der Ausnehmung und dem in diese ragenden Abschnitt der Ventilkugel ein Flüssigkeitskissen bildet, welches sich bei Schwingungen der Ventilkugel verformt. Hierbei werden Flüssigkeitsschichten bzw. Flüssigkeitsmoleküle gegeneinander verschoben und es kommt in dem Flüssigkeitskissen zur Ausbildung von innerer Reibung, welche eine dämpfende Wirkung in Bezug auf Schwingungen der Ventilkugel hat. Weil zwischen dem Rand der Ausnehmung und der Ventilkugel noch. Bewegungsspiel vorhanden ist, wird eine Zwangsführung der Ventilkugel vermieden.

Gemäß einer Weiterbildung dieser Ausführungsform wird der Abschnitt der Ventilkugel durch ein Kugelsegment und die Ausnehmung durch eine sich entlang der Längserstreckung der Blattfeder erstreckende Nut gebildet. Weil sich dann ein räumlich begrenztes Flüssigkeitskissen hauptsächlich zwischen dem Längsrand der Nut und der Ventilkugel ausbildet, werden durch diese Maßnahme vornehmlich in einer Richtung quer zur Längserstreckung der Ventil-Blattfeder auftretende Schwingungen gedämpft.

Insgesamt bewirkt die mit den erfindungsgemäßen Maßnahmen erzielte Schwingungs- und Geräuschreduzierung ein verbessertes Regelverhalten des Druckreglers.

### Zeichnungen

Ausführungsbeispiele der Erfindung sind in der Zeichnung dargestellt und in der nachfolgenden Beschreibung näher erläutert. In den Figuren zeigt :
- Fig.1: eine Querschnittsdarstellung einer bevorzugten Ausführungsform eines Druckreglers gemäß der Erfindung;
- Fig.2: eine Schnittdarstellung entlang der Linie II-II von Fig.1;
- Fig.3: eine Schnittdarstellung einer weiteren Ausführungsform;
- Fig.4: eine Schnittdarstellung einer weiteren Ausführungsform;
- Fig.5: eine Ansicht von unten auf eine Ventil-Blattfeder entlang der Pfeile V-V von Fig.4.

### Beschreibung der Ausführungsbeispiele

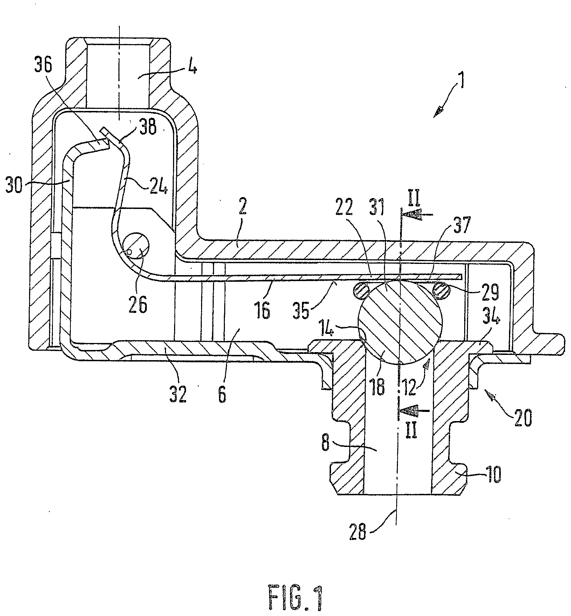

Der in Fig.1 insgesamt mit 1 bezeichnete und dort in einer Schließstellung dargestellte Druckregler ist gemäß einer bevorzugten Ausführungsform an einer aus Maßstabsgründen nicht dargestellten Kraftstoffpumpe befestigt, die in einem Kraftstofftank eines Kraftfahrzeugs angeordnet ist, und dient zur Regelung des Kraftstoffdrucks im Kraftstoffsystem einer selbstzündenden Brennkraftmaschine. Der Druckregler 1 hat ein Gehäuse 2 mit L-förmigem Querschnitt, wobei in einem nach oben gezogenen Gehäusehals eine Durchgangsöffnung 4 ausgebildet ist, welche einen Innenraum 6 des Gehäuses 2 mit dem Kraftstofftank verbindet. Bodenseitig ragt in das Gehäuse 2 ein einen Druckeingang 8 bildendes Anschlußstück 10, welches an eine nicht dargestellte Druckleitung des Kraftstoffsystems angeschlossen und von einem Kraftstoffverteiler rückströmenden Kraftstoffs durchflossen ist.

An dem Anschlußstück 10 ist endseitig ein Ventilsitz 12 mit einer Kegelfläche 14 zur Zentrierung einer Ventilkugel 18 angeordnet. Anstatt direkt am Anschlußstück 10 kann der Ventilsitz 12 auch am Gehäuse 2 ausgebildet sein, in diesem Fall sind das Gehäuse 2 und der Ventilsitz 12 beispielsweise als einstückiges, spanabhebend bearbeitetes Gußteil ausgeführt. Der Kegelwinkel der Kegelfläche 14 beträgt beispielsweise 60 Grad. Gegen den Ventilsitz 12 ist aufgrund der Wirkung einer Ventil-Blattfeder 16 die Ventilkugel 18 gedrängt. Die Ventil-Blattfeder 16, die Ventilkugel 18 und der Ventilsitz 12 bilden zusammen ein Überströmventil 20 des Druckreglers 1. Die Ventilkugel 18 kann aus Stahl, Keramik oder Kunststoff bestehen, ihr Durchmesser beträgt vorzugsweise 3 mm bis 12 mm.

Die Ventil-Blattfeder 16 hat vorzugsweise eine winkelige Form, bestehend aus zwei im wesentlichen zueinander rechtwinkelig verlaufenden Armen 22, 24 und ist um eine im Gehäuse 2 gelagerte Gelenkachse 26 schwenkbar, welche quer zur Längserstreckung der Ventil-Blattfeder 16 und senkrecht zu einer die Mittelachse 28 des Ventilsitzes 12 enthaltenden Ebene ist. Die Gelenkachse 26 verläuft außerdem im Bereich einer gedachten Stoßlinie der beiden Arme 22, 24 der Ventil-Blattfeder 16. Die Gesamtlänge der aufgewickelten Ventil-Blattfeder beträgt beispielsweise 10 bis 40 mm, ihre Breite etwa 5 mm bis 20 mm. Der Abstand der Mittelachse 28 des Ventilsitzes 12 von der Gelenkachse beträgt vorzugsweise 8 mm bis 35 mm.

Zwischen dem ventilsitzseitigen Arm 22 der Ventil-Blattfeder 16, der vorzugsweise senkrecht zur Mittelachse 28 des Ventilsitzes verläuft, und der mit ihrem Scheitel die Ventil-Blattfeder 16 kontaktierenden Ventilkugel 18 ist ein Dämpfungsring 29 angeordnet. Genauer ragt die Ventilkugel 18 mit einem Kugelsegment 31 ihrer zur Ventil-Blattfeder 16 weisenden Kugelhälfte in eine Ringöffnung 37 des Dämpfungsringes 29 hinein und hält ihn dadurch an der Ventil-Blattfeder 16. Die Durchmesser der Ringöffnung 37 und der Ventilkugel 18 sind dabei vorzugsweise derart gewählt, daß zwischen der Ventil-Blattfeder 16 und dem Dämpfungsring 29 noch ein geringes Bewegungsspiel in Form eines schmalen Spalts 33 vorhanden ist. An dem bezüglich der Gelenkachse 26 auf der dem Ventilsitz 12 gegenüberliegenden Seite liegenden Arm 24 der Ventil-Blattfeder greift eine Vorspannkraft an, welche am ventilsitzseitigen Arm 22 eine die Ventilkugel 18 gegen den Ventilsitz 12 drängende Kraft erzeugt. Diese Vorspannkraft wird vorzugsweise durch eine Spann-Blattfeder 30 gebildet, welche im wesentlichen parallel zu dem auf der dem Ventilsitz 12 gegenüber liegenden Seite liegenden Arm 24 der Ventil-Blattfeder 24 verläuft. Die Spann-Blattfeder 30 ist vorzugsweise mit einem das Gehäuse 2 des Druckreglers 1 bodenseitig verschließenden Dekkel 32 einstückig ausgebildet, der im Montagezustand von einer radial-äußeren Ringschulter 34 des Anschlußstücks 10 hintergriffen ist, und ragt von diesem senkrecht weg. Das freie Ende 36 der Spann-Blattfeder 30 ist zu dem auf der dem Ventilsitz 12 gegenüber liegenden Seite liegenden Arm 24 der Ventil-Blattfeder 16 hin gebogen und greift in eine an diesem ausgebildete gerundete Ausformung 38 derart ein, daß eine von der Spann-Blattfeder 30 erzeugte Vorspannkraft im wesentlichen senkrecht in den Arm 24 der Ventil-Blattfeder 16 eingeleitet wird. Die Spann-Blattfeder 30 übt mit ihrem gebogenen Ende 36 auf die gelenkig gelagerte Ventil-Blattfeder 16 ein Drehmoment aus, durch welches die Ventilkugel 18 gegen den Ventilsitz 12 gedrängt wird. Die Größe der aufgrund der Vorspannkraft der Spann-Blattfeder 30 auf die Ventilkugel 18 als Reaktion kopfseitig wirkenden Schließkraft ergibt sich aufgrund der gewählten Hebelverhältnisse der beiden Arme 22, 24. An der Ventil-Blattfeder 16 herrscht dann Drehmomentgleichgewicht.

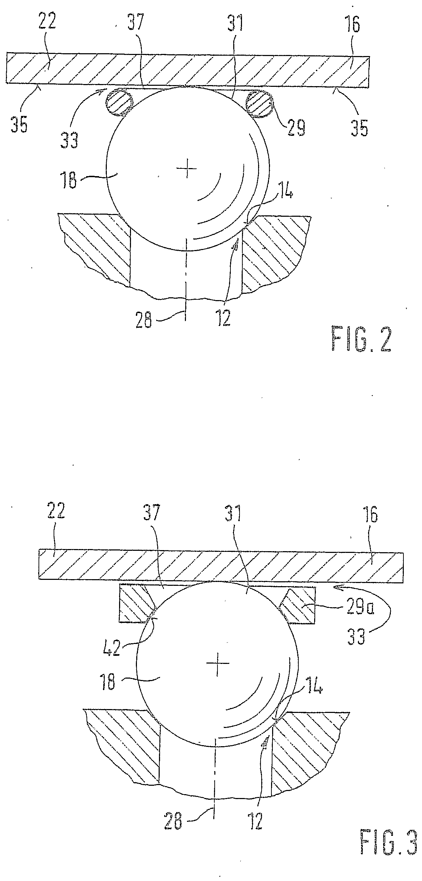

Gemäß dem Ausführungsbeispiel von Fig.2 hat der umlaufende Dämpfungsring 29 vorzugsweise einen kreisförmigem Querschnitt und besteht aus einem Elastomer. Alternativ kann der Dämpfungsring 29a gemäß der Ausführung von Fig.3 durch einen durch spanabhebende Bearbeitung oder durch Spritzgießen hergestellten Kunststoff-Formling gebildet werden, dessen zur Ventilkugel 18 weisender Innenrand beispielsweise mit einer Fase 42 versehen ist oder aber eine komplementär zur Ventilkugel 18 ausgebildete, kugelschichtförmige Sitzfläche aufweist. Der Dämpfungsring 29, 29a kann anstatt aus Kunststoff auch aus einem anderen Material, beispielsweise auch aus Stahl gefertigt sein. Entscheidend ist, daß sich im Betrieb zwischen dem Dämpfungsring 29, 29a, der Ventilblattfeder 16 und der Ventilkugel 18 Reibungskräfte bilden, welche einerseits ausreichend groß sind, um Schwingungsbewegungen der Ventilkugel 18 zu dämpfen, welche aber andererseits nicht so groß sind, daß die Zentrierung der Ventilkugel 18 im Ventilsitz 12 behindert wird, wenn das Überströmventil 20 schließt. Gemäß einer weiteren, nicht dargestellten Ausführungsform ist der Dämpfungsring 29, 29a nicht lose um die Ventilkugel 18 herum angeordnet, vielmehr kontaktiert er neben der Ventilkugel 18 auch die Ventil-Blattfeder 16 ohne Bewegungsspiel, wobei er beispielsweise zwischen der Ventilkugel 18 und der Ventil-Blattfeder 16 geklemmt und elastisch aufgeweitet wird.

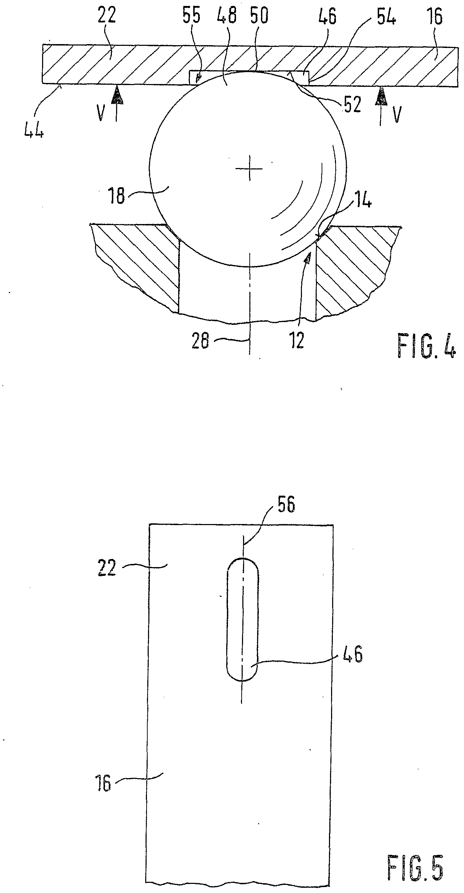

Bei dem weiteren Ausführungsbeispiel der Erfindung nach den Fig.4 und 5 sind die gegenüber dem vorhergehenden Beispiel gleichbleibenden und gleichwirkenden Teile durch die gleichen Bezugszeichen gekennzeichnet. Hierbei ist die zur Ventilkugel 18 weisende Fläche 44 der Ventil-Blattfeder 16 mit einer Ausnehmung versehen, in welche ein Kugelsegment 48 der Ventilkugel 18 derart hineinragt, daß einerseits der Scheitel 50 der Ventilkugel 18 mit einem Boden 52 der Ausnehmung in Kontakt steht und andererseits zwischen dem Rand 54 der Ausnehmung und der Ventilkugel 18 allseits noch ein Spielraum 55 vorhanden ist. Vorzugsweise wird die Ausnehmung durch eine sich entlang der Längserstreckung der Ventil-Blattfeder 16 erstreckende Nut 46 gebildet, wie die Ansicht von Fig.5 zeigt, in welcher die Ventil-Blattfeder 16 von unten und ohne Ventilkugel 18 dargestellt ist. Vorzugsweise erstreckt sich die Nut 46 nicht über die gesamte Länge des ventilsitzseitigen Arms 22 der Ventil-Blattfeder 16, sondern ausgehend von der Mittelachse 28 des Ventilsitzes 12 nach beiden Seiten ein Stück weit. Der Spielraum 55 zwischen dem Rand 54 der Nut 46 und der Ventilkugel 18 sollte auch toleranzbedingte Achsabweichungen zwischen der Mittelachse 28 des Ventilsitzes 12 und einer Mittellinie 56 der Nut 46 zulassen, so daß Zentrierbewegungen der Ventilkugel 18 in Bezug zum Ventilsitz 12 möglich sind. Alternativ könnte anstatt einer Nut 46 auch ein kreisrundes Sackloch oder ein Sackloch mit vielekkig oder beliebig geformtem Rand die Ausnehmung in der Ventil-Blattfeder 16 bilden.

Vor diesem Hintergrund ist die Funktionsweise des Druckreglers 1 wie folgt : Wenn am Druckeingang 8 Kraftstoffdruck herrscht, der groß genug ist, um eine gegenüber der auf die Ventilkugel 18 wirkende Schließkraft größere Druckkraft zu erzeugen, hebt die Ventilkugel 18 vom Ventilsitz 12 ab und gibt einen bestimmten Durchlaßquerschnitt frei, so daß Kraftstoff in den Innenraum 6 des Gehäuses und von dort zum Druckausgang 4 strömen kann. Aufgrund der elastischen Eigenschaften der Ventil-Blattfeder 16 steigt der Durchlaßquerschnitt mit größer werdendem Kraftstoffvolumen an, wobei die Druckdifferenz zwischen Druckeingang 8 und Druckausgang 4 demgegenüber nur geringfügig und etwa linear ansteigt.

Die Erfindung ist jedoch nicht auf einen solchen Druckregler beschränkt. Vielmehr kann es sich bei dem erfindungsgemäßen Druckregler auch um einen Druckregler handeln, bei welchem sich die Größe des Ausgangsdrucks von der des Eingangsdrucks unterscheidet und eingestellt werden kann.

## Patentansprüche

1. Druckregler für eine Kraftstoffversorgungsanlage einer Brennkraftmaschine zum Regeln eines Kraftstoffdrucks, beinhaltend ein Ventil, welches eine durch die Wirkung einer Ventil-Blattfeder (16) gegen einen Ventilsitz (12) in Schließstellung gedrängte Ventilkugel (18) umfasst, **dadurch gekennzeichnet, dass** zwischen der Ventilkugel (18) und einer zu dieser weisenden Fläche (35) der Ventil-Blattfeder (16) ein Dämpfungsring (29, 29a) angeordnet und durch die Ventilkugel (18) gehalten ist.

2. Druckregler nach Anspruch 1, **dadurch gekennzeichnet, dass** ein Abschnitt (31; 48) einer der Ventil-Blattfeder (16) zugewandten Kugelhälfte der Ventilkugel (18) in eine der Ventilkugel (18) oder der Ventil-Blattfeder (16) zugeordnete Ausnehmung ragt.

3. Druckregler nach Anspruch 2, **dadurch gekennzeichnet, dass** die Ventilkugel (18) die Ventil-Blattfeder (16) kontaktiert und zwischen einem Rand der Ausnehmung und der Ventil-Blattfeder (16) oder der Ventilkugel (18) ein Spiel (33; 55) vorhanden ist.

4. Druckregler nach Anspruch 2 oder 3, **dadurch gekennzeichnet, dass** der Abschnitt der Ventilkugel (18) durch ein Kugelsegment (31; 48) gebildet wird.

5. Druckregler nach einem der vorhergehenden Ansprüche, **dadurch gekennzeichnet, dass** der Dämpfungsring (29) durch einen aus einem Elastomer bestehenden Ring mit kreisförmigem Querschnitt gebildet wird.

6. Druckregler nach einem der vorhergehenden Ansprüche, **dadurch gekennzeichnet, dass** der Dämpfungsring (29a) durch einen Kunststoff-Formling gebildet wird.

7. Druckregler nach Anspruch 6, **dadurch gekennzeichnet, dass** der Kunststoff-Formling durch spanabhebende Bearbeitung oder durch Spritzgießen hergestellt ist.

8. Druckregler nach einem der Ansprüche 2 bis 4, dadurch gekenntzeichnet, dass die Ausnehmung an der zur Ventilkugel (18) weisenden Fläche (44) der Ventil-Blattfeder (16) ausgebildet ist und die Ventilkugel (18) mit einem Boden (52) der Ausnehmung in Kontakt steht.

9. Druckregler nach Anspruch 8, **dadurch gekennzeichnet, dass** die Ausnehmung durch eine sich entlang der Längserstreckung der Ventil-Blattfeder (16) erstreckende Nut (46) gebildet wird.

10. Druckregler nach Anspruch 9, **dadurch gekennzeichnet, dass** sich die Nut (46), ausgehend von der Mittelachse (28) des Ventilsitzes (12), nach beiden Seiten ein Stück weit erstreckt.

## Claims

1. Pressure regulator for a fuel supply system of an internal combustion engine for regulating a fuel pressure, containing a valve which comprises a valve ball (18) which, by the action of a valve leaf spring (16), is pressed against a valve seat (12) in the closing position, **characterized in that** a damping ring (29, 29a) is arranged between the valve ball (18) and a face (35) of the valve leaf spring (16) that is oriented towards the valve ball, and that this damping ring is held by the valve ball (18).

2. Pressure regulator according to Claim 1, **characterized in that** a section (31; 48) of a hemisphere, oriented towards the valve leaf spring (16), of the valve ball (18) projects into a recess assigned to the valve ball (18) or to the valve leaf spring (16).

3. Pressure regulator according to Claim 2, **characterized in that** the valve ball (18) comes into contact with the valve leaf spring (16), and a clearance (33; 55) is present between a rim of the recess and the valve leaf spring (16) or the valve ball (18).

4. Pressure regulator according to Claim 2 or 3, **characterized in that** the section of the valve ball (18) is formed by a ball segment (31; 48).

5. Pressure regulator according to one of the preceding claims, **characterized in that** the damping ring (29) consists of a ring made of an elastomer and having a circular cross section.

6. Pressure regulator according to one of the preceding claims, **characterized in that** the damping ring (29a) consists of a plastic shaped body.

7. Pressure regulator according to Claim 6, **characterized in that** the plastic shaped body is produced by chip-removing machining or by injection moulding.

8. Pressure regulator according to one of Claims 2 to 4, **characterized in that** the recess is formed on that face (44) of the valve leaf spring (16) oriented towards the valve ball (18), and the valve ball (18) is in contact with a bottom (52) of the recess.

9. Pressure regulator according to Claim 8, **characterized in that** the recess consists of a groove (46) extending along the longitudinal extent of the valve leaf spring (16).

10. Pressure regulator according to Claim 9, **characterized in that** the groove (46), extends a certain distance to either side proceeding from the central axis (28) of the valve seat (12).

## Revendications

1. Régulateur de pression pour installation d'alimentation en carburant d'un moteur à combustion interne, destiné à réguler la pression du carburant et comprenant une soupape qui comporte une sphère de soupape (18) repoussée en position de fermeture contre un siège de soupape (12) par l'effet d'un ressort à lame (16) de soupape,
**caractérisé en ce que**
un anneau d'amortissement (29, 29a) est disposé entre la sphère de soupape (18) et une surface (35) du ressort à lame (16) de soupape tournée vers elle, et est maintenu par la sphère de soupape (18).

2. Régulateur de pression selon la revendication 1, **caractérisé en ce qu'**une partie (31; 48) d'une moitié de la sphère de soupape (18) tournée vers le ressort à lame (16) de soupape s'étend dans une découpe associée à la sphère de soupape (18) ou au ressort à lame (16) de soupape.

3. Régulateur de pression selon la revendication 2, **caractérisé en ce que** la sphère de soupape (18) est en contact avec le ressort à lame (16) de soupape et **en ce qu'**un jeu (33; 55) est prévu entre un bord de la découpe et le ressort à lame (16) de soupape ou la sphère de soupape (18).

4. Régulateur de pression selon les revendications 2 ou 3, **caractérisé en ce que** la partie de la sphère de soupape (18) est formée par un segment de sphère (31; 48).

5. Régulateur de pression selon l'une des revendications précédentes, **caractérisé en ce que** l'anneau d'amortissement (29) est formé d'un anneau de section tranversale circulaire en élastomère.

6. Régulateur de pression selon l'une des revendications précédentes, **caractérisé en ce que** l'anneau d'amortissement (29a) est formé par une ébauche en matière synthétique.

7. Régulateur de pression selon la revendication 6, **caractérisé en ce que** l'ébauche en matière synthétique est réalisée par traitement à enlèvement de matière ou par moulage par injection.

8. Régulateur de pression selon l'une des revendications 2 à 4, **caractérisé en ce que** la découpe est formée sur la surface (44) du ressort à lame (16) de soupape tournée vers la sphère de soupape (18) et **en ce que** la sphère de soupape (18) est en contact avec le fond (52) de la découpe.

9. Régulateur de pression selon la revendication 8, **caractérisé en ce que** la découpe est formée d'une rainure (46) qui s'étend le long de l'extension longitudinale du ressort à lame (16) de soupape.

10. Régulateur de pression selon la revendication 9, **caractérisé en ce que** la rainure (46) s'étend légèrement des deux côtés de l'axe central (28) du siège de soupape (12).
